# EUROPÄISCHE PATENTSCHRIFT

(11) **EP 0 995 246 B1**
(45) Veröffentlichungstag und Bekanntmachung des Hinweises auf die Patenterteilung: **10.10.2001**
(21) Anmeldenummer: 98936416.1
(22) Anmeldetag: 11.07.1998
(51) Int. Cl.: H02B 1/30

(54) **RAHMENGESTELL FÜR EINEN SCHALTSCHRANK**
RACK FOR A SWITCH CABINET
BAIE POUR ARMOIRE DE DISTRIBUTION

(30) Priorität: 16.07.1997 DE 19730430
(43) Veröffentlichungstag der Anmeldung: 26.04.2000
(73) Patentinhaber: Rittal-Werk Rudolf Loh GmbH & Co. KG, 35745 Herborn (DE)
(72) Erfinder: REUTER, Wolfgang, D-57299 Burbach (DE)
(74) Vertreter: Fleck, Hermann-Josef, Dr.-Ing.
(86) Internationale Anmeldenummer: EP9804302
(87) Internationale Veröffentlichungsnummer: WO9904470

(56) Entgegenhaltungen:
- DE-C- 4 446 223
- DE-C- 19 540 300
- DE-U- 7 122 105
- DE-U- 9 302 769

## Beschreibung

Die Erfindung betrifft ein Rahmengestell für einen Schaltschrank, das aus Rahmenschenkeln zusammengesetzt ist, die im Bodenbereich des Schaltschrankes einen, eine mittels Bodenblechen verschließbare Öffnung umschließenden Bodenrahmen bilden, der mit einem Sockel verbindbar oder verbunden ist (Siehe DE-C-4 446 223).

Das Rahmengestell für einen Schaltschrank besteht in der Regel aus zwölf identischen Rahmenschenkeln, wie die DE 33 44 598 C1 zeigt. Dabei sind an die Rahmenschenkel in Bezug auf die Ausbaumöglichkeiten im Innenraum und die Abdichtung der Wandelemente und der Schranktür mehr und mehr Anforderungen gestellt, die ein teueres Rahmenprofil erfordern. Bei diesen bekannten Rahmengestellen ist auch der Bodenrahmen aus vier aufwendigen Rahmenschenkeln aufgebaut, obwohl in diesem Bereich in der Regel lediglich Bodenbleche mit Kabeleinführungen die untere Öffnung des Schaltschrankes abschließen müssen. Dabei sind oft zusätzliche Auflageprofile mit dem Bodenrahmen verbunden, auf dem die Bodenbleche aufliegen und an diesen festgelegt sind. Dieser aufwendige Bodenrahmen erfordert einen größeren Platzbedarf, der zum überwiegenden Teil als Installationsraum für den Schaltschrank verloren geht. Darüberhinaus verteuert der bekannte Bodenrahmen mit den Auflageprofilen das Rahmengestell und damit den Schaltschrank.

Es ist Aufgabe der Erfindung, ein Rahmengestell der eingangs erwähnten Art zu schaffen, dessen Bodenrahmen preisgünstiger hergestellt werden kann, weniger Installationsraum des Schaltschrankes belegt und auf einfache Weise zur Festlegung der Bodenbleche ausgenützt werden kann.

Diese Aufgabe wird nach der Erfindung dadurch gelöst, daß der Bodenrahmen aus vier abgelängten U-Profilabschnitten und vier quadratischen Eckstücken zusammengesetzt ist, wobei die U-Profilabschnitte nach oben offen sind, einen rechtwinklig hochgebogenen Außenrand und einen L-förmigen, zum Außenrand gerichteten Innenrand aufweisen, während die Eckstücke mit Befestigungsflanschen die aufeinanderstoßenden U-Profilabschnitte überdecken und mit diesen verbunden sind, und daß die Eckstücke mit einem innenliegenden Eckwinkel an den Innenseiten der Innenränder der aufeinanderstoßenden U-Profilabschnitte anliegen und mit einem außenliegenden Außenwinkel in den Eckbereichen den Außenrand des Bodenrahmens vervollständigen.

Die U-Profilabschnitte sind sehr einfach und haben nur eine geringe Bauhöhe. Die Eckstücke sind einfache Stanz-Biegeteile und ergänzen den Bodenrahmen zu einer geschlossenen Einheit. Der L-förmige Innenrand bringt eine einfache Auflage- und Befestigungsmöglichkeit für die Bodenbleche.

Die Verbindung zwischen den U-Profilabschnitten und den Eckstücken ist nach einer Ausgestaltung so vorgenommen, daß die Befestigungsflansche der Eckstücke nach oben versetzt sind und die aufeinanderstoßenden U-Profilabschnitte im Bereich ihrer Basisschenkel überdecken und mit diesen verschweißt sind.

Ist nach einer weiteren Ausgestaltung vorgesehen, daß die Eckstücke in ihren quadratischen Basisplatten mit Befestigungsaufnahmen versehen sind, dann kann der Bodenrahmen auf einfache Weise mit dem Sockel des Schaltschrankes verschraubt werden.

Die Verbindung zwischen dem Bodenrahmen und den vertikalen Rahmenschenkeln des Rahmengestelles ist nach einer Ausgestaltung so gelöst, daß die Eckstücke nach oben gerichtete Verbindungsflansche zum Anbringen der vertikalen Rahmenschenkel des Rahmengestelles tragen.

Eine einfache Befestigungsmöglichkeit für die Bodenbleche wird dadurch geschaffen, daß die Endabschnitte der L-förmigen Innenränder Auflageränder für Auflageabschnitte von Bodenblechen bilden und daß die Bodenbleche mittels U-förmiger, mit Klemmschrauben versehener Klammern an den L-förmigen Innenränder der U-Profilabschnitte festgelgt sind.

Die Bodenöffnung des Rahmengestelles läßt sich dadurch unterteilen, daß der Innenrand des Bodenrahmens auf einander gegenüberliegenden Seiten mit aufeinander ausgerichteten Aufnahmen für einen Halfenschienen-Abschnitt versehen ist, auf dem sich Teil-Bodenbleche abstützen und festgelegt sind.

Die Erfindung wird anhand von zwei in den Zeichnungen in perspektivischer Ansicht dargestellten Ausführungsbeispielen näher erläutert. Es zeigt:
- Fig. 1: einen quadratischen Bodenrahmen, der mittels Bodenblechen verschlossen werden kann, und
- Fig. 2: einen rechteckförmigen Bodenrahmen, der mittels einer Halfenschiene in zwei mittels Bodenbleche verschließbare Bereiche unterteilt ist, wobei in einem Bereich eine Kabeleinführung vorgesehen ist.

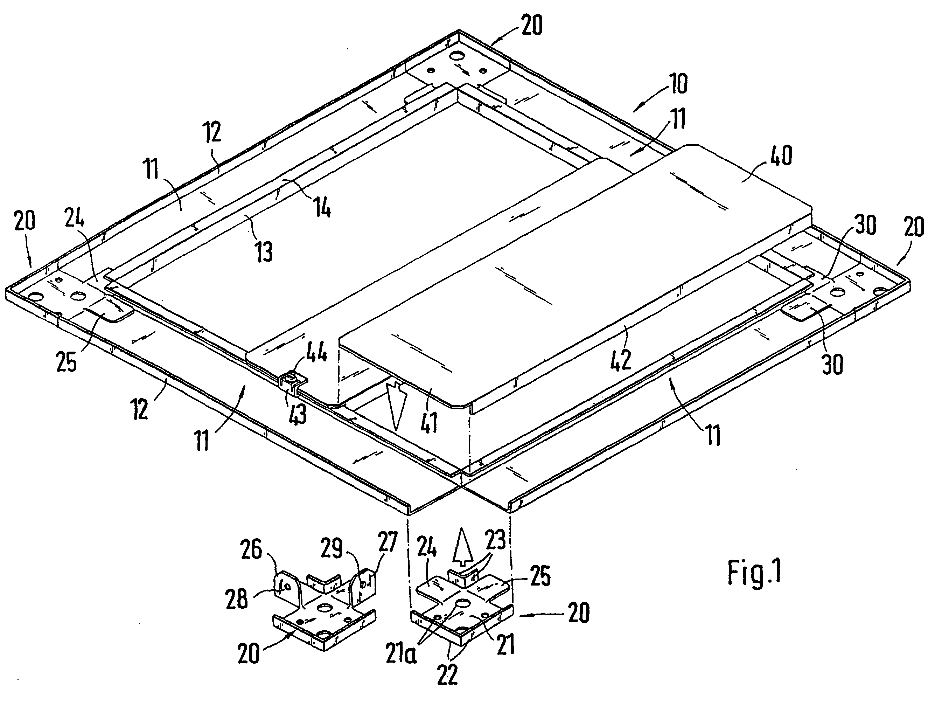

Wie Fig. 1 zeigt, wird ein quadratischer Bodenrahmen 10 nach der Erfindung aus vier gleich langen U-Profilabschnitten 11 und vier quadratischen Eckstücken 20 zusammengesetzt. Die U-Profilabschnitte 11 sind in Fig. 1 mit einem nach oben gerichteten Außenrand 12 und mit einem L-förmigen Innenrand 13, 14 versehen, wobei der Endabschnitt 14 des Innenrandes zum Außenrand 12 gerichtet ist und eine Auflage für Auflageränder 41 von Bodenblechen 40 bildet.

Die Eckstücke 20 haben eine quadratische Basisplatte 21 mit Befestigungsaufnahmen 21 a. Nach oben gerichtete Eckwinkel 22 und 23 sind an der Basisplatte 21 angebogen, wobei sich der innenliegende Eckwinkel 23 an den Innenseiten der Anfangsabschnitte 13 der aufeinanderstoßenden U-Profilabschnitte 11 anlegen, während der außenliegende Eckwinkel 22 den Außenrand 12 im zugeordneten Eckbereich des Bodenrahmens 10 vervollständigt. An der Basisplatte 21 sind Befestigungsflansche 24 und 25 angebracht, die gegenüber der Basisplatte 21 um die Dicke des Basisschenkels der U-Profilabschnitte 11 nach oben versetzt sind, so daß sie diese übergreifen und mit diesen verbunden werden können. Dabei werden die Befestigungsflansche 24 und 25 vorzugsweise an den U-Profilabschnitten 11 angeschweißt, z.B. angepunktet.

Sind die Bodenbleche 40 an den senkrecht zu den Auflagerändern 41 stehenden Seiten durch abgewinkelte Ränder 42 versteift, dann sind diese Ränder 42 im Bereich der Auflageränder 41 ausgespart. Der Bodenrahmen 10 ist nach oben offen und kann über die Befestigungsaufnahmen 21a der Eckstücke 20 mit einem Sockel verschraubt werden.

Wie der Fig. 1 zu entnahmen ist, können an den Eckstücken 20 auch nach oben gerichtete Verbindungsflansche 26 und 27 mit Befestigungsbohrungen 28 und 29 angebracht sein, an denen die vertikalen Rahmenschenkel des Rahmengestelles festgeschraubt werden können. Das Rahmengestell bildet dann mit dem Bodenrahmen 10 eine Einheit.

Die Bodenbleche 40 liegen mit den Auflagerändern 41 auf den Endabschnitten 14 des Innenrandes des Bodenrahmens 10 auf. U-förmige Klammern 43 nehmen den Endabschnitt 14 und den Auflagerand 41 auf und mit einer Klemmschraube 44 werden beide in der Klammer 43 verspannt.

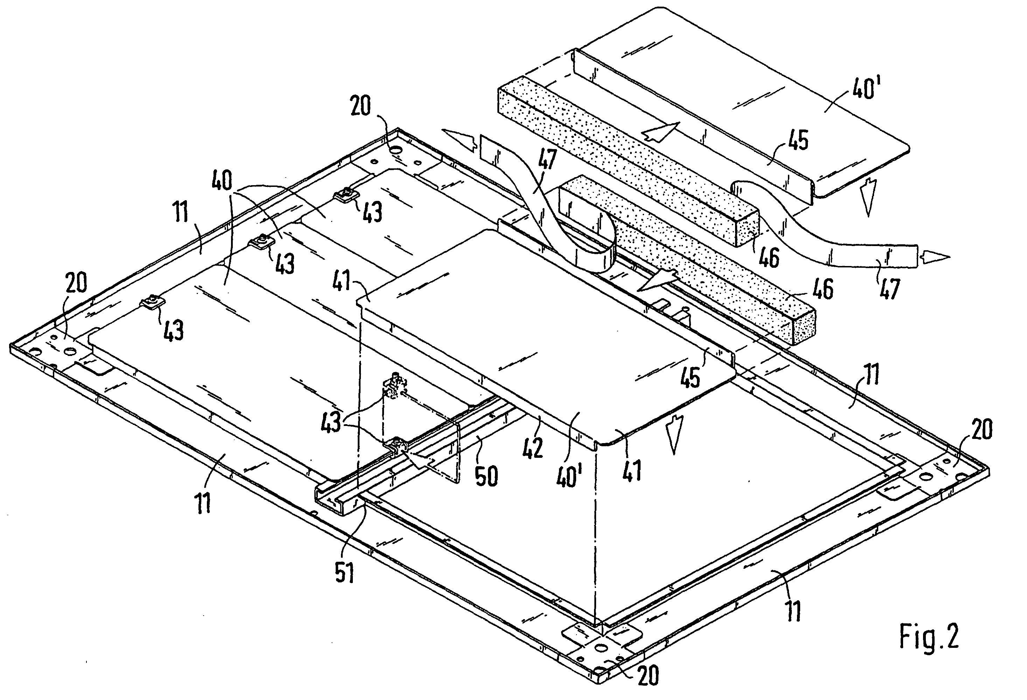

Wie am Ausführungsbeispiel nach Fig. 2 gezeigt ist, kann der Bodenrahmen 10 auch rechteckförmig gestaltet werden, wobei in Längsrichtung eine Unterteilung vorgenommen ist. Dazu sind im Innenrand 11, 12 auf einander gegenüberliegenden Seiten Aufnahmen 51 ausgespart, in die bündig ein Halfenschienen-Abschnitt 50 eingesetzt ist, der ebenfalls Auflageränder für Teil-Bodenbleche 40' bildet. Diese Teil-Bodenbleche 40' liegen mit Auflagerändern 42 auf dem Endabschnitt 14 des Innenrandes und dem Halfenschienen-Abschnitt 50 auf und werden mittels U-förmiger Klammern 43 daran festgelegt.

Die Teil-Bodenbleche 40' können mit Abdichträndern 45 gegeneinander gerichtet sein, die als Kunststoff-Schaumstoffblöcke ausgebildete Dichtungsstreifen 46 tragen und als Kabeleinführung ausgebildet sind. Von dem Dichtungsstreifen 46 werden Schutzstreifen 47 abgezogen, so daß sie mit der freigelegten Klebeschicht mit den Abdichträndern 45 der Teil-Bodenbleche 40' verbunden werden können.

Die Aufteilung des Bodenrahmens 10 kann auch über mehrere Halfenschienen-Abschnitte 50 weiter unterteilt werden. Außerdem können im Bodenbereich dadurch auch mehrere Kabeleinführungen geschaffen werden.

Der Außenrand und der Innenrand des Bodenrahmens 10 ist nach oben gerichtet und weist eine kleine Bauhöhe auf, so daß der Bodenrahmen von einer vorgegebenen Schrankhöhe nur einen geringen, vernachlässigbaren Anteil belegt. Außerdem bietet der neue Bodenrahmen 10 direkte Befestigungs- und Unterteilungsmöglichkeiten für Bodenbleche. Der Bodenrahmen 10 ist einfach im Aufbau und preisgünstig herstellbar, da außer den abgelängten U-Profilabschnitten 11 nur einfache Stanz-Biege-Teile als Eckstücke 20 erforderlich sind.

## Patentansprüche

1. Rahmengestell für einen Schaltschrank, das aus Rahmenschenkeln zusammengesetzt ist, die im Bodenbereich des Schaltschrankes einen, eine mittels Bodenblechen (40) verschließbare Öffnung umschließenden Bodenrahmen (10) bilden, der mit einem Sockel verbindbar oder verbunden ist,
**dadurch gekennzeichnet,**
**daß** der Bodenrahmen (10) aus vier abgelängten U-Profilabschnitten (11) und vier quadratischen Eckstücken (20) zusammengesetzt ist, wobei die U-Profilabschnitte nach oben offen sind, einen rechtwinklig hoch gebogenen Außenrand (12) und einen L-förmigen, zum Außenrand (12) gerichteten Innenrand (13,14) aufweisen, während die Eckstücke (20) mit Befestigungsflanschen (24,25) die aufeinanderstoßenden U-Profilabschnitte (11) überdecken und mit diesen verbunden sind, und
**daß** die Eckstücke (20) mit einem innenliegenden Eckwinkel (23) an den Innenseiten der Innenränder (13,14) der aufeinanderstoßenden U-Profilabschnitte (11) anliegen und mit einem außenliegenden Außenwinkel (22) in den Eckbereichen den Außenrand (12) des Bodenrahmens (10) vervollständigen.

2. Rahmengestell nach Anspruch 1,
**dadurch gekennzeichnet,**
**daß** die Befestigungsflansche (24,25) der Eckstücke (20) nach oben versetzt sind und die aufeinanderstoßenden U-Profilabschnitte (11) im Bereich ihrer Basisschenkel überdecken und mit diesen verschweißt sind.

3. Rahmengestell nach Anspruch 1 oder 2,
**dadurch gekennzeichnet,**
**daß** die Eckstücke (20) in ihren quadratischen Basisplatten (21) mit Befestigungsaufnahmen (21a) versehen sind.

4. Rahmengestell nach einem der Ansprüche 1 bis 3,
**dadurch gekennzeichnet,**
**daß** die Eckstücke (20) nach oben gerichtete Verbindungsflansche (26, 27) zum Anbringen der vertikalen Rahmenschenkel des Rahmengestelles tragen.

5. Rahmengestell nach einem der Ansprüche 1 bis 4,
**dadurch gekennzeichnet,**
**daß** die Endabschnitte (14) der L-förmigen Innenränder (13, 14) Auflageränder für Auflageabschnitte (41) von Bodenblechen (40) bilden und
**daß** die Bodenbleche (40) mittels U-förmiger, mit Klemmschrauben (44) versehener Klammern (43) an den L-förmigen Innenränder (13, 14) der U-Profilabschnitte (11) festgetgt sind.

6. Rahmengestell nach einem der Ansprüche 1 bis 5,
**dadurch gekennzeichnet,**
**daß** der Innenrand (13, 14) des Bodenrahmens (10) auf einander gegenüberstehenden Seiten mit aufeinander ausgerichteten Aufnahmen (51) für einen Halfenschienen-Abschnitt (50) versehen ist, auf dem sich Teil-Bodenbleche (40') abstützen und festgelegt sind.

## Claims

1. Framework for a switch cabinet, which is made up of frame legs which, in the floor region of the switch cabinet, form a floor frame (10) which encloses an opening, closeable by means of floor panels (4c), and which can be, or is, connected to a base, **characterized in that** the floor frame (10) is made up of four cut-to-length U-profile sections (11) and four square corner elements (20), the U-profile sections being open in the upward direction and having an outer border (12) bent up at right angles and an L-shaped inner border (13, 14) directed towards the outer border (12), while the corner elements (20), by way of fastening flanges (24, 25), overlap the abutting U-profile sections (11) and are connected thereto, and **in that** the corner elements (20) butt against the insides of the inner borders (13, 14) of the abutting U-profile sections (11) by way of an inner corner angle (23) and complete the outer border (12) of the floor frame (10) in the corner regions by way of an outer angle (22).

2. Framework according to Claim 1, **characterized in that** the fastening flanges (24, 25) of the corner elements (20) are offset upwards and overlap the abutting U-profile sections (11), and are welded thereto, in the region of the base legs of the same.

3. Framework according to Claim 1 or 2, **characterized in that** the corner elements (20) are provided with fastening mounts (21a) in their square base plates (21).

4. Framework according to one of Claims 1 to 3, **characterized in that** the corner elements (20) bear upwardly directed connecting flanges (26, 27) for the attachment of the vertical frame legs of the framework.

5. Framework according to one of Claims 1 to 4, **characterized in that** the end sections (14) of the L-shaped inner borders (13, 14) form bearing borders for bearing sections (41) of floor panels (40), and **in that** the floor panels (40) are secured on the L-shaped inner borders (13, 14) of the U-profile sections (11) by means of U-shaped clamps (43) provided with clamping screws (44).

6. Framework according to one of Claims 1 to 5, **characterized in that** the inner border (13, 14) of the floor frame (10) is provided, on opposite sides, with aligned mounts (51) for a Halfen rail section (50) on which floor sub-panels (40') are supported and secured.

## Revendications

1. Baie pour une armoire de distribution, qui est composée de parties de cadre qui forment, dans la région du pied de l'armoire de distribution, un cadre de pied (10) entourant une ouverture obturable au moyen de tôles de pied (40), lequel peut être ou est assemblé à un socle, **caractérisée en ce que** le cadre de pied (10) est composé de quatre tronçons de profilé en U mis à longueur (11) et de quatre pièces d'angle carrées (20), dans laquelle les tronçons de profilé en U sont ouverts vers le haut, présentent un bord extérieur (12) replié perpendiculairement vers le haut et un bord intérieur (13, 14) en forme de L dirigé vers le bord extérieur (12), tandis que les pièces d'angle (20) recouvrent avec des pattes de fixation (24, 25) les tronçons de profilé en U (11) jointifs l'un à l'autre et sont assemblées à ceux-ci, et **en ce que** les pièces d'angle (20) sont appliquées par une cornière d'angle intérieure (23) sur les faces intérieures des bords intérieurs (13, 14) des tronçons de profilé en U (11) et complètent avec une cornière extérieure (22) placée à l'extérieur dans les régions d'angle le bord extérieur (12) du cadre de pied (10).

2. Baie suivant la revendication 1, **caractérisée en ce que** les pattes de fixation (24, 25) des pièces d'angle (20) sont déportées vers le haut et recouvrent les tronçons de profilé en U (11) jointifs l'un à l'autre dans la région de leur partie de base et sont soudées à ceux-ci.

3. Baie suivant la revendication 1 ou 2, **caractérisée en ce que** les pièces d'angle (20) sont pourvues de logements de fixation (21a) dans leurs plaques de base carrées (21).

4. Baie suivant l'une quelconque des revendications 1 à 3, **caractérisée en ce que** les pièces d'angle (20) portent des pattes d'assemblage (26, 27) dirigées vers le haut pour la pose des parties de cadre verticales de la baie.

5. Baie suivant l'une quelconque des revendications 1 à 4, **caractérisée en ce que** les tronçons d'extrémité (14) des bords intérieurs en forme de L (13, 14) forment des bords d'appui pour des tronçons d'appui (41) de tôles de pied (40), et **en ce que** les tôles de pied (40) sont fixées aux bords intérieurs en forme de L (13, 14) des tronçons de profilé en U (11) au moyen de griffes (43) en forme de U pourvues de vis de serrage (44).

6. Baie suivant l'une quelconque des revendications 1 à 5, **caractérisée en ce que** le bord intérieur (13, 14) du cadre de pied (10) est pourvu, sur des côtés opposés l'un à l'autre, de logements (51) alignés l'un avec l'autre pour un tronçon de rail Halfen (50), sur lequel des éléments des tôles de pied (40') reposent et sont fixés.
